# EUROPÄISCHE PATENTSCHRIFT

(11) **EP 0 815 618 B1**
(45) Veröffentlichungstag und Bekanntmachung des Hinweises auf die Patenterteilung: **11.08.1999**
(21) Anmeldenummer: 96907455.8
(22) Anmeldetag: 13.03.1996
(51) Int. Cl.: H01R 13/53, H02G 15/184

(54) **STECKVORRICHTUNGS-SYSTEM ZUR VERBINDUNG VON MITTELSPANNUNGS- ODER HOCHSPANNUNGSKABELN**
PLUG CONNECTOR SYSTEM FOR CONNECTING MEDIUM- OR HIGH-VOLTAGE CABLES
SYSTEME A FICHES DE CONTACT POUR CONNECTER DES CABLES DE HAUTE ET MOYENNE TENSION

(30) Priorität: 13.03.1995 DE 19509012
(43) Veröffentlichungstag der Anmeldung: 07.01.1998
(73) Patentinhaber: DÄTWYLER AG KABEL + SYSTEME, CH-6460 Altdorf (CH)
(72) Erfinder: ONODI, Tamas, CH-6460 Altdorf (CH)
(74) Vertreter: Turi, Michael, Dipl.-Phys.
(86) Internationale Anmeldenummer: EP9601072
(87) Internationale Veröffentlichungsnummer: WO9628863

(56) Entgegenhaltungen:
- DE-A- 1 465 493
- DE-A- 4 001 191
- DE-A- 4 301 878
- DE-A- 4 310 125
- DE-U- 8 704 680
- DE-U- 8 805 217
- US-A- 4 067 636
- US-A- 4 090 759

## Beschreibung

Die Erfindung betrifft ein Steckvorrichtungs-System zur Verbindung von Mittelspannungs- oder Hochspannungskabeln, gebildet durch zwei komplementäre, jeweils an einem Kabelende anzubringende Steckvorrichtungen, die jeweils ein inneres Leiterkontaktteil und ein äußeres anpassungsfähiges Isolationsteil, welches das Kabelende umgibt, aufweisen, wobei die Isolationsteile Andruckflächen haben, die im zusammengesteckten Zustand des Steckvorrichtungs-Systems aufeinandergepreßt werden. Ein derartiges System ist beispielsweise aus der DE-A-14 65 493 bekannt.

Isolierte Mittelspannungs- und Hochspannungskabel werden jeweils in Trommellängen hergestellt und müssen zur Bildung längerer Kabel verlängert werden, wobei der Kabelleiter und die Kabelisolation zu verbinden sind. Anfänglich stellte man eine solche Kabelverbindung her, indem man die Kabelisolation an den Kabelenden entfernte, die Leiter mit einem Verbindungsstück verband und schließlich die Verbindungsstelle mit isolierenden Bändern bandagierte. Die so erzielte Isolation im Verbindungsbereich hat jedoch nur eine relativ geringe elektrische Festigkeit und zeigt mangelhafte Haltbarkeit. Zudem ist die Methode relativ arbeitsaufwendig.

Eine ähnliche Problemstellung wie beim Verbinden zweier Kabel tritt auf, wenn ein Kabel an einen Apparat, z.B. einen Transformator angeschlossen werden muß. Hierfür verwendet man schon seit längerem vorgefertigte Anschlußteile, die mit dem Anschluß des Kabelleiters auch für eine durchgehende Isolation sorgen.

Die Isolation ist hierbei allerdings nicht einstückig, denn sie wird durch zwei gesonderte Isolationsteile mit einer Trennfläche dazwischen gebildet. Ein wesentliches Problem hierbei ist, daß im Bereich dieser Trennfläche keine Lufteinschlüsse verbleiben dürfen, da es sonst hier zu Durchschlägen kommen kann, also die elektrische Festigkeit nicht ausreichend ist. Man löst dies, indem man wenigstens für eines der beiden Isolationsteile ein in der Form anpassungsfähiges Material (z.B. Siliconkautschuk) verwendet und beide Isolationsteile zusammenpreßt, wodurch sich eine formschlüssige Anschmiegung ohne Lufteinschlüsse ergibt. Um hohe Anpreßdrücke und eine möglichst großflächige Andruckfläche zu erzielen, bildet man ein Isolationsteil mit innenkonusförmiger und das andere mit außenkonusförmiger Andruckfläche aus. Diese Konusse preßt man in Richtung der Konusachsen zusammen. Man kann so hohe elektrische Festigkeiten erzielen.

Das anpassungsfähige Isolationsteil kann sich nicht nur an das andere Isolationsteil, sondern auch an das Kabeläußere formschlüssig anschmiegen und kann so auch für eine eine ausreichende Hochspannungsfestigkeit des Übergangs Isolationsteil/Kabel sorgen (siehe z.B. US-PS 4 090 759). Das harte Isolationsteil kann dies hingegen nicht. Für den Anschluß eines Kabels an einen Apparat wirkt sich dies nicht störend aus, da das apparatseitige Leiterelement (z.B. ein Anschlußbolzen oder eine Anschlußschiene) i.a. im Apparat eingeschlossen ist und daher keiner Umschmiegung bedarf. Man ordnet daher das harte Isolationsteil dem apparatseitigen Anschlußteil zu.

Im Prinzip ähnlich aufgebaut sind Steckvorrichtungs-Systeme des Standes der Technik zur Verbindung zweier Mittelspannungs- oder Hochspannungskabel; ein Beispiel hierfür ist aus der WO 94/23481 bekannt. Die Verbindung zweier Kabel ist allerdings problematischer als die Verbindung eines Kabels mit einem Apparat, da hier in der Regel zwei Kabelenden mit anpassungsfähigem Material zu umschließen sind. Dieses bekannte Steckvorrichtungs-System ist aus drei Steckvorrichtungen aufgebaut: Neben zwei identischen, jeweils an einem Kabelende anzubringenden Steckvorrichtungen mit jeweils einem inneren Leiterkontaktteil und einem äußeren außenkonusförmigen Isolationsteil, welches aus anpassungsfähigem Material (Siliconkautschuk) ist und das Kabelende umgibt, hat es als dritte Steckvorrichtung eine Verbindungsmuffe aus hartem Material (Gießharz). Diese weist zwei Steckplätze auf, die komplementär zu den Kabel-Steckvorrichtungen ausgebildet sind und mit einer Leiterdurchführung elektrisch verbunden sind. Zum Verbinden der beiden Kabel steckt man die beiden Kabel-Steckvorrichtungen in die beiden Steckplätze und preßt sie mit ihren anpassungsfähigen außenkonusförmigen Andruckflächen gegen deren harte innenkonusförmige Andruckflächen.

Obwohl mit diesem Steckvorrichtungs-System grundsätzlich eine Verbindung zweier Mittelspannungs- oder Hochspannungskabel mit ausreichender elektrischer Festigkeit möglich ist, hat es verschiedene Nachteile: Zum einen ist es in seinen elektrischen Eigenschaften nicht optimal, da es zwei Kontaktstellen und zwei Trennflächen, die jeweils eine durchschlaggefährdete Schwachstelle darstellen, aufweist. Zudem bedingt die harte Verbindungsmuffe, welche die Funktion eines Leiterstücks hat, Übergänge zwischen verschiedenen Isoliermaterialien. Zum anderen ist wegen der Dreiteiligkeit der Platzbedarf relativ groß und das Zusammenstekken und Trennen der Kabel recht arbeitsaufwendig.

Während letztere Nachteile bei stationär verlegten Hochspannungskabeln weniger stark ins Gewicht fallen, können sie bei Anwendungen, die ein häufiges Lösen der Kabelverbindung erfordern und bei denen nur wenig Platz zur Verfü gung steht, gravierend sein. Eine derartige Anwendung ist beispielsweise bei modernen Hochgeschwindigkeits-Halbzügen gegeben, bei denen bei hohen Fahrgeschwindigkeiten mit eng benachbarten Stromabnehmern eine einwandfrei Stromabnahme wegen Oberleitungsschwingungen nicht mehr gewährleistet ist. Der Fahrstrom muß dann in einem Hochspannungskabel durch den ganzen Zug geleitet werden, wobei die einzelnen Fahrzeuge des Zugs voneinander trennbar bleiben müssen.

Bei der eingangs erwähnten DE-A-14 65 493 können sich Probleme wegen der hohen Reibung zwischen den Andruckflächen ergeben.

Aus der DE-A-40 01 191 ist ein Steckverbinder bekannt, der die Funktion eines T-Stückes für einen Außenkonus-Geräteanschluß mit hartem Isolationsteil hat. Normalerweise wird hierauf ein anpassungsfähiger Kabelstecker gesteckt. Um eine weitere Anschlußmöglichkeit zu schaffen, wird der T-stückartige Steckverbinder zwischen den harten Geräteanschluß und den anpassungsfähigen Kabelstecker eingesetzt. Er selbst ist aus hartem Material gefertigt. Um mit dem harten Steckverbinder eine Anschmiegung an den ebenfalls harten Geräteanschluß zu erzielen, ist der Steckverbinder-Konus (Innenkonus) mit einer Schicht aus elastischem Material versehen.

Weiteren Stand der Technik bilden die DE-OS 27 26 403, die in Silikon eingebettete Steuerelektroden zeigt, sowie die DE-OS 37 22 955, die ein Isolationsteil mit unterschiedlichen Konuswinkeln betrifft.

Die Erfindung geht von dem technischen Problem aus, die genannten Nachteile zu überwinden.

Sie löst dieses Problem durch ein Steckvorrichtungs-System zur Verbindung von Mittelspannungs- oder Hochspannungskabeln der eingangs genannten Art, welches dadurch gekennzeichnet ist, daß im Bereich der Andruckfläche ein Isolationsteil anpassungsfähig und das andere relativ hart ist, was durch eine Schicht harten Materials erzielt wird (Anspruch 1).

Unter "Mittelspannung" wird eine Spannung von 1 kV bis 36 kV und unter "Hochspannung" eine darüberliegende Spannung verstanden (die angegebenen Spannungswerte sind 3-Phasen-Spannungen; die entsprechenden Spannungswerte gegen Erde sind um einen Faktor √3 kleiner). "Kabel" ist in einem weiten Sinn zu verstehen und umfaßt auch nichtbiegsame Leitungen. Im allgemeinen sind die zu verbindenden Mittel spannungs- oder Hochspannungskabel einpolige Energiekabel. Für mehrpolige Kabel kann das erfindungsgemäße Steckvorrichtungs-System jedoch durch entsprechend mehrere Steckvorrichtungen gebildet sein, die beispielsweise in einem Gehäusepaar zusammengefaßt sind. "Komplementär" bedeutet, daß sich die Steckvorrichtungen passend zusammenstecken lassen, wie etwa ein Stecker und eine dazugehörige Steckbuchse. Mit "anpassungsfähig" ist die vorzugsweise andauernde Fähigkeit eines Körpers gemeint, seine Form auf eine Druckbelastung hin der eines anderen Körpers (und zwar insbesondere der "relativ harten" Andruckfläche) anzupassen.

Bei dem erfindungsgemäßen Steckvorrichtungs-System lassen sich die Isolationsteile durch die Andruckflächen-Paarung anpassungsfähig/hart bei geringer Reibung formschlüssig zusammenpressen. Dabei besteht das System nur aus zwei komplementären Steckvorrichtungen, die zum Teil im Stand der Technik nötige dritte Steckvorrichtung in Form der Verbindungsmuffe wird nicht gebraucht. Das harte Andruckflächenmaterial dient vorrangig nur der Reibungsverminderung, es hat nicht zwingend - wie zum Teil im Stand der Technik - auch noch die Funktion einer Leiterisolierung. Statt zwei Kontaktstellen und zwei Trennflächen ist jeweils nur noch eine einzige vorhanden.

Das erfindungsgemäße Steckvorrichtungs-System hat somit folgende Vorteile:
- es ist in der Herstellung weniger aufwendig;
- es hat wegen seiner nur einfachen Kontaktstelle und Trennfläche und auch weil das harte Andruck flächenmaterial nicht die Funktion einer Leiterisolierung erfüllen muß, verbesserte elektrische Eigenschaften und zeigt damit eine größere Hoch spannungsfestigkeit;
- der Arbeitsaufwand für das Zusammenstecken und Trennen von Kabeln ist erheblich geringer;
- die Handhabbarkeit ist durch Wegfall eines drit ten, im nichtzusammengesteckten Zustand losen Teils wesentlich verbessert; und
- der Platzbedarf ist deutlich geringer.
Obwohl die Andruckflächen grundsätzlich auch senkrecht zur Längsachse des Steckvorrichtungs-Systems (d.h. zur Steckachse) verlaufen können, ist es zur Erzielung möglichst großer Andruckflächen und -kräfte - und damit einer hohen elektrischen Festigkeit - vorteilhaft, wenn sie zur Längsachse geneigt sind (Anspruch 2).

Besonders vorteilhaft zur Erzielung hoher elektrischer Festigkeit ist eine konzentrische gerade Kreisgeometrie, bei der die Andruckflächen im wesentlichen jeweils die Form eines Kegelstumpfmantels oder mehrerer zusammengesetzter Kegelstumpfmäntel haben und so die Isolationsteile einen Außen- und einen dazu komplementären Innenkonus bilden (Anspruch 3). In dieser Geometrie liegen die inneren Leiterkontaktteile auf den Konusachsen, die mit der Längsachse des Systems zusammenfallen.

Vorzugsweise ist das im Bereich der Andruckfläche relativ harte Isolationsteil das den Außenkonus bildende Teil (Anspruch 4). Diese Maßnahme schützt das Außenkonusteil vor Beschädigung und erleichtert das Zusammenstecken, da hierdurch das anpassungsfähige äußere Innenkonusteil auf Dehnung (und nicht etwa - wie im umgekehrten Fall - das innere Außenkonusteil auf Druck) beansprucht wird.

Vorzugsweise sind beide Isolationsteile in dem das Kabelende umgebenden Bereich aus anpassungsfähigem Material. Sie können sich damit an das Kabeläußere anschmiegen, wodurch am Übergang Kabel-Isolationsteil eine durchgehende Isolation hoher elektrischer Festigkeit geschaffen wird.

Zur Erzielung einer möglichst hochgradigen Anpaßbarkeit und elektrischen Festigkeit bestehen beide Isolationsteile im wesentlichen über ihr gesamtes Volumen aus anpassungsfähigem Material.

Die Schicht harten Materials kann vorteilhaft durch ein Gießharzteil, z.B. aus gehärtetem Epoxidharz, UP-Harz (UP = ungesättigter Polyester), Acrylharz, Methacrylatharz, Siliconharz, Polyurethanharz, Polysulfidharz, Phenolharz, Melaminharz oder Mischungen hiervon, ein Kunststoff-Drehteil, z.B. aus Polytetrafluorethylen oder Polyethylen, oder einen Lackfilm gebildet sein (Anspruch 5). Wesentlich bei diesen verschiedenen Alternativen ist nur, daß die Schicht harten Materials elektrisch nichtleitend und ausreichend hart und oberflächenglatt ist, um mit hinreichend kleiner Reibung gegenüber dem komplementären anpassungsfähigen Isolationsteil verschiebbar zu sein.

Das anpassungsfähige Material der Isolationsteile ist vorzugsweise ein im wesentlichen gummielastisches, isolierendes Material (Anspruch 6), wie z.B. Siliconkautschuk oder Butylkautschuk.

An verschiedenen Stellen der Steckvorrichtungen treten Feldinhomogenitäten auf, die zu lokalen Feldstärkeüberhöhungen und in der Folge zu Überschlägen führen könnten. Besonders gefährdet ist die Trennfläche der Isolationsteile und Übergangsstellen am Kabel, an denen eine untere Leiterisolation oder der Leiter selbst freigelegt ist. Zum Ausgleich dieser Feldinhomogenitäten sind in die Isolationsteile vorzugsweise eine oder mehrere Feldsteuerelektroden integriert (Anspruch 7).

Bei dem oben erwähnten bekannten Steckvorrichtungs-System sind Feldsteuerelektroden in die Gießharz-Verbindungsmuffe eingegossen. Diese zeigen im allgemeinen eine andere thermische Ausdehnung als das umgebende Gießharzmaterial, was im Lauf der Zeit zu Rissen im Gießharz und damit zu einer Verringerung der elektrischen Festigkeit führen kann. Um dies zu vermeiden ist es bevorzugt, daß ein Teil der oder alle Feldsteuerelektroden in das anpassungsfähige Material integriert sind und aus einem Material mit im wesentlichen gleichen Elastizitäts- und Wärmeausdehnungseigenschaften wie dieses bestehen (Anspruch 8). Beispielsweise können bei einem Isolationsteil aus Siliconkautschuk die Steuerelektroden aus mit Ruß versetztem Siliconkautschuk bestehen.

Eine noch weitergehende Angleichung der mechanischen Eigenschaften und der Wärmeausdehnung der Feldsteuerelektroden an das sie umgebende anpassungsfähige Material erzielt man, wenn sie über ihr inneres Volumen aus einem mit dem anpassungsfähigen Material identischen Material bestehen und nur eine dünne leitfähige Oberflächenschicht, z.B. eine halbleitende Lackschicht, aufweisen (Anspruch 9).

Die Leiterkontaktteile sind vorteilhaft durch ein Stecker kontaktteil und ein Buchsenkontaktteil gebildet. Zur Erzielung eines möglichst kleinen Übergangswiderstands dienen der Kontaktvermittlung zwischen dem Stecker- und dem Buchsenkontaktteil vorzugsweise federnde Kontaktlamellen. Vorzugsweise sind das Stecker- und das Buchsenkontaktteil mit dem jeweils zugeordneten Ende des Kabelleiters durch Aufpressen verbunden (Anspruch 10). Das Buchsenkontaktteil selbst kann zweiteilig sein; es kann z.B. aus einem Buchsenpreßteil mit Kontaktlamellen und einem darübergeschobe nen Kontakthülsenteil bestehen.

Besonders überschlaggefährdet ist der Bereich der Trennfläche zwischen den Isolationsteilen. Vorteilhaft überläßt man daher die Feldsteuerung nicht allein den Feldsteuerelektroden, sondern läßt das Buchsenkontaktteil durch eine nichtzylindrische, insbesondere bauchige Formgebung hieran teilnehmen (Anspruch 11).

Ein anderes Problem betrifft die Trennbarkeit der Steckvorrichtungen: Die zusammengepreßten Andruckflächen können im Lauf der Zeit eine so innige Verbindung miteinander eingehen, daß sie danach überhaupt nicht mehr zerstörungsfrei trennbar sind. Eine zerstörungsfreie Trennbarkeit auch nach längerer Zeit ist aber insbesondere im Eisenbahnbetrieb wichtig. Um dies sicherzustellen, ist vorzugsweise zwischen den Andruckflächen der Isolationsteile ein Trennmittel, insbesondere ein Fett oder fetthaltiges Mittel, vorhanden (Anspruch 12). Das Trennmittel trägt - indem es reibungsmindernd wirkt - auch zu einem leichteren Zusammenpressen und einer vollständigeren Anschmiegung der Andruckflächen bei.

Eine Erleichterung des Zusammensteckens und Trennes kann auch durch eine geringfügige Verformung der Andruckflächen erzielt werden, und zwar indem die zum Zusammenstecken und Trennen aufgewendeten Schub- bzw. Zugkräfte eine Querkompression der Außenkonus-Andruckfläche bzw. eine Querexpansion der Innenkonus-Andruckfläche hervorrufen (Anspruch 13). Die Konusse werden also beim Zusammenstecken und Trennen verformt, und zwar wird der Außenkonus enger und der Innenkonus weiter.

Aber selbst bei Verwendung eines Trennmittels und ggf. bei Verformung der Konusse können die die zum Trennen nötigen Kräfte aufgrund von Adhäsion der Andruckflächen so groß sein, daß sie ein schnelles und einfaches Trennen, beispielsweise im Eisenbahnbetrieb, behindern. Das Steckvorrichtungs-System ist daher vorzugsweise so ausgebildet, daß der Innenkonus in seinem äußeren Endbereich einen geringfügig größeren Konuswinkel als der Außenkonus aufweist (Anspruch 14). Dies kann erzielt werden, indem der Innenkonus im äußeren Endbereich wenigstens einen Abschnitt mit gegenüber dem Gesamtkonus größeren Konuswinkel und/oder der Außenkonus in entsprechendem Bereich wenigsten einen Abschnitt mit gegenüber dem Gesamtkonus kleineren Konuswinkel hat. Innen- und Außenkonus sind also nicht genau komplementär. Die Winkelabweichung ist so klein, (z.B. ca. 1°), daß es beim Zusammenpressen der Isolationsteile noch zu einer vollständigen Anschmiegung der Andruckflächen ohne Lufteinschlüsse kommt. Jedoch ist durch diese Maßnahme der Anpreßdruck in dem äußeren Endbereich herabgesetzt, so daß sich die Andruckflächen beim Auseinanderziehen der Steckvorrichtungen zunächst hier willig trennen. Nachdem einmal eine Trennfuge im Endbereich vorhanden ist, schreitet sie leicht und über den restlichen Bereich mit größerem Anpreßdruck fort. Die Maßnahme ermöglicht so ein schnelles und einfaches Trennen der Steckvorrichtungen.

Als weitere vorteilhafte Maßnahme für ein leichtes Trennen kann ein Druckfluid, insbesondere Druckluft zwischen die Andruckflächen eingeleitet werden (Anspruch 15). Das Druckfluid dringt zwischen die Andruckflächen ein und löst sie voneinander, so daß die Steckvorrichtungen anschließend mit relativ geringem Kraftaufwand auseinandergezogen werden können.

Zum Schutz des Steckvorrichtungs-Systems und auch zu seiner Befestigung z.B. an einem Eisenbahnfahrzeug weisen die Steckvorrichtungen vorzugsweise jeweils ein Gehäusteil auf, wobei im zusammengesteckten Zustand des Systems ein Gehäu seteil das andere wenigstens teilweise übergreift (Anspruch 16). Besonders vorzugsweise ist es teleskopisch über das andere schiebbar. Bei einem automatisch zusammensteckbaren Steckvorrichtungs-System, wie es etwa in eine automatische Eisenbahnkupplung integriert sein kann, kann aber auch z.B. das eine Gehäuseteil das andere mit nach außen abspreizbaren Klauen umgreifen.

Um die Leiterkontakt- und Isolationsteile im nichtzusammengesteckten Zustand vor Verschmutzung und Berührung zu schützen, weisen die Gehäuseteile vorzugsweise jeweils eine vordere Schutzklappe auf, welche im nichtzusammengesteckten Zustand des Systems schließbar ist, und zwar besonders vorzugsweise durch Federbelastung selbstschließend ist (Anspruch 17).

Sicherheitstechnisch vorteilhaft ist hierbei eine Ausbildung, bei welcher die Schutzklappen in geschlossener Stellung zwecks Erdung des Kabelleiters das jeweilige Leiterkontaktteil kontaktieren (Anspruch 18).

Im zusammengesteckten Zustand des Steckvorrichtungs-Systems sind die Schutzklappen geöffnet und könnten daher an ihren Innenseiten verschmutzen. Der dort haftende Schmutz könnte dann beim Schließen der Schutzklappen in den eigentlich schmutzfrei zu haltenden Raum gelangen. Um dies zu vermei den, ist vorzugsweise auf jedem Gehäuseteil eine Auflagefläche ausgebildet, auf der die Schutzklappe des jeweils anderen Gehäuseteils im zusammengesteckten Zustand des Steckvorrichtungs-Systems aufliegt (Anspruch 19).

Die Gehäuseteile können vorteilhaft dazu dienen, die zum Zusammenstecken bzw. Trennen anzuwendenden Kräfte auf die Leiterkontakt- und Isolationsteile zu übertragen. Vorzugs weise ist hierzu an den Gehäuseteilen wenigstens ein Spann/Druckhebelverschluß angeordnet, mit denen die Steck vorrichtungen zusammengezogen und auseinandergedrückt werden können (Anspruch 20). Alternativ kann bei einem Spreizklauen aufweisenden äußeren Gehäuseteil das Zusammenstecken durch Anziehen der Spreizklauen erfolgen.

Die Gegenstände der Ansprüche 7-20 sind auch bei den eingangs genannten Steckvorrichtungssystemen des Standes der Technik vorteilhaft einsetzbar, und zwar bei Systemen mit beiden Isolationsteilen aus anpassungsfähigem Material, bei Systemen mit einem Isolationsteil aus anpassungsfähigem und einem aus hartem Material und bei Systemen mit zwei Steckvorrichtungen aus anpassungsfähigem Material und einer Verbindungsmuffe aus hartem Material. Es wird der Vorbehalt erklärt, ggf. auch auf solche Systeme Patentansprüche zu richten.

Die Erfindung wird nun anhand von Ausführungsbeispielen und der angefügten schematischen Zeichnung näher erläutert. In der Zeichnung zeigen:
- Fig. 1: einen Längsschnitt eines Steckvorrichtungs-Systems im zusammengesteckten Zustand;
- Fig. 2: einen Ausschnitt von Fig. 1;
- Fig. 3: eine Draufsicht des Steckverbindungs-Systems von Fig. 1; und
- Fig. 4: eine schematische Seitenansicht von gekuppelten Eisenbahnfahrzeugen mit dem Steckvorrichtungs-System von Fig. 1.

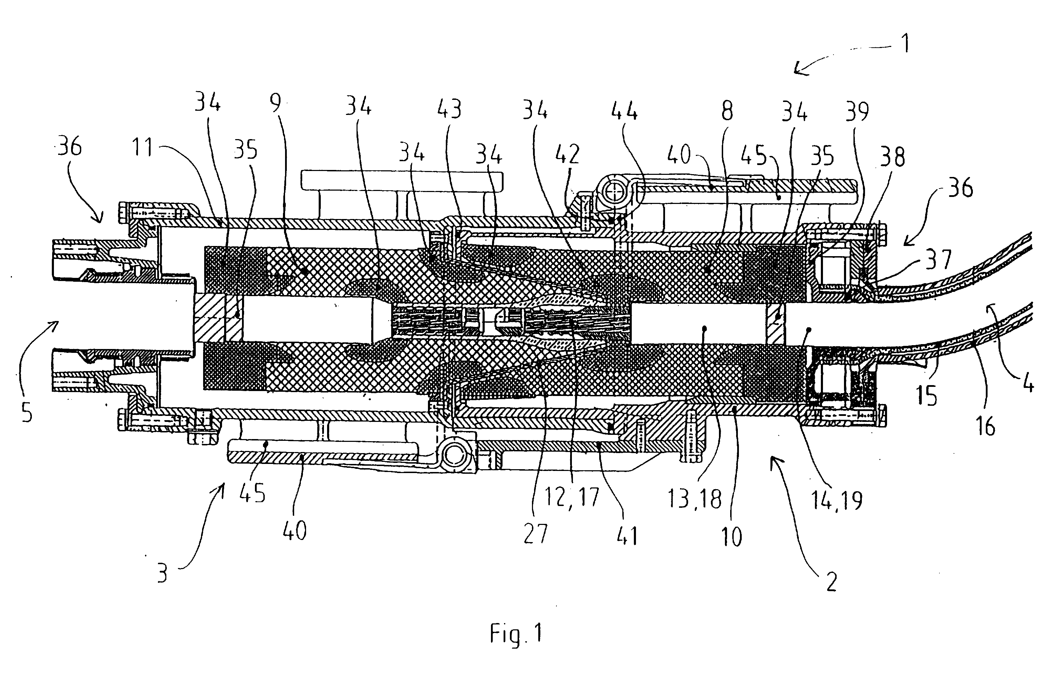

Das Steckvorrichtungs-System 1 gemäß Fig. 1 wird durch zwei komplementäre Steckvorrichtungen, nämlich einem Stecker 2 und eine Buchse 3 gebildet, die jeweils am Ende von Hochspannungskabeln 4, 5 angebracht sind. Sie weisen in konzentrischer Anordnung um die Längsachse des Systems 1 jeweils ein mittiges Leiterkontaktteil, nämlich ein Steckerkontaktteil 6 bzw. ein Buchsenkontaktteil 7, ein dieses umgebendes Isolationsteil, nämlich ein Innenkonus-Isolationsteil 8 bzw. ein Außenkonus-Isolationsteil 9, und ein dieses umschließendes Gehäuseteil, nämlich ein Steckergehäuseteil 10 bzw. ein Buchsengehäuseteil 11 auf.

Diese Zuordnungen zwischen Leiterkontakt- und Isolationsteil und dem Gehäuseteil sind keineswegs zwingend: Bei anderen (nicht gezeigten) Ausführungsformen sind dem Außenkonus-Isolationsteil mit dem Buchsenkontaktteil das Stekkergehäuseteil und dem Innenkonus-Isolationsteil mit dem Steckerkontaktteil das Buchsengehäuseteil zugeordnet.

Die Hochspannungskabel 4, 5 sind von innen nach außen folgendermaßen aufgebaut: Das Innere bildet ein Leiter 12 in Form eines Seiles. Zum Ausgleich der ungleichmäßigen Seiloberfläche ist hierauf eine (nicht gezeigte) dünne, erste halbleitende Schicht aufgebracht. Dann folgt eine Isolationsschicht 13, z.B. aus Polyethylen. Darauf liegt wiederum eine dünne, zweite halbleitende Schicht 14, die außen für ein definiertes Erdpotential sorgt. Anschließend folgt eine Schutzschicht 15, die keine elektrische, sondern nur eine mechanische Schutzfunktion hat. Das mit dem Stecker 2 verbundene Kabel 4 ist schließlich noch von einem hochflexiblen Metallschlauch 16 umgeben.

Zum Anschluß an die Steckvorrichtungen 2 bzw. 3 ist der Leiter 12 in Kabelrichtung stufenweise freigelegt. Vom Kabelende her gesehen ist er in einem ersten Abschnitt 17 von allen Deckschichten befreit. Es folgt ein zweiter Abschnitt 18, in dem die Isolationsschicht 13 das Äußere bildet. Daran schließt sich ein dritter Abschnitt 19 an, in dem die zweite halbleitende Schicht 14 das Äußere bildet, bis schließlich außerhalb der Steckvorrichtungen 2, 3 das unversehrte Kabel 4, 5 mit der äußeren Schutzschicht 15 und ggf. dem Metallschlauch 16 verläuft.

Auf den ersten freiliegenden Abschnitt 17 der Kabel 4, 5 ist das Steckerkontaktteil 6 bzw. ein Buchsenpreßteil 20 durch Verformung eines Preßabschnitts 21 aufgepreßt. Am Kabelende weisen beide aufgepreßten Teile 6, 20 jeweils einen Kontaktkopf 22 auf, der ringsum mit nach außen federnden Kontaktlamellen 23 ausgerüstet ist. Der zum Stekkerkontaktteil 6 gehörende Kontaktkopf 22 ist endseitig konisch abgeschrägt.

Ein Kontakthülsenteil 24, das zusammen mit dem Buchsenpreßteil 20 das Buchsenkontaktteil 7 bildet, ist aus innen galvanisch versilbertem Aluminium und hat die Form eines kreiszylindrischen Rohres, das an einem Ende kelchförmig ausgebaucht ist und dort auch eine vergrößerte Wanddicke aufweist. Der Rohrinnendurchmesser im nichtausgebauchten Bereich ist derart gewählt, daß der zugeordnete Kontaktkopf 22 eingeschoben einen elektrischen Kontakt herstellt.

Das Kontakthülsenteil 24 wird bei der Montage des Steckvorrichtungs-Systems 1 zusammen mit dem Außenkonus-Isolationsteil 9, in das es eingegossen ist, soweit über den Kontaktkopf 22 des Buchsenpreßteils 20 geschoben, daß es dessen Preßabschnitt 21 vollständig überdeckt. Der Kontaktkopf 22 des Steckerkontaktteils 6 durchquert beim Zusammenstecken des Steckvorrichtungs-Systems 1 den ausgebauchten Bereich, bis er den nichtausgebauchten Bereich erreicht und der folgende Preßabschnitt 21 ebenfalls vollständig vom Kontakthülsenteil 24 überdeckt ist. Seine konische Abschrägung bildet zusammen mit der sich verengenden Innenkontur des ausgebauchten Kontakthülsenteils 24 eine Art Doppelkonus, der ein Verkanten des Steckerkontaktteils 6 und Kontakthülsenteils 24 beim Zusammenstecken ausschließt. Mit einem etwas größeren Innendurchmesser am kelchseitigen Ende des Kontakthülsenteils 24 korrespondiert ein größerer Außendurchmesser des Steckerkontaktteils 6 jenseits des Preßabschnitts 21, so daß hier zwecks Vermeidung von Streufeldern kein Spalt verbleibt.

Die Isolationsteile 8, 9 umgeben die Kabelenden mit dem aufgepreßten Steckerkontaktteil 6 bzw. Buchsenkontaktteil 7. Im zusammengesteckten Zustand bilden sie zusammen im wesentlichen die Form eines Kreiszylinders. Sie bestehen im wesentlichen aus einem anpassungsfähigen, gummiartigen Material, wie z.B. Siliconkautschuk, und weisen - damit ihr Äußeres definiert auf Erdpotential gehalten wird - an der Zylinderaußenfläche eine halbleitende Schicht auf, die elektrisch in Kontakt mit der zweiten halbleitenden Schicht 14 der Kabel 4, 5 steht.

Stirnseitig haben sie komplementäre kegelstumpfmantelförmige Andruckflächen 25, 26, und zwar hat das Steckerkontaktteil 6 die Innenkonus-Andruckfläche 25 und das Buchsenkontaktteil 7 die Außenkonus-Andruckfläche 26. Die Kegelachsen liegen auf der Längsachse des Systems 1. Der Kegelwinkel (bezogen auf die Längsachse) beträgt 5 bis 45°, hier ungefähr 12°. Der Kegelabschnitt beginnt - von innen nach außen gesehen - etwas außerhalb des Steckerkontaktteils 6 bzw. des Buchsenkontaktteils 7 und reicht bis nahezu zum Außenumfang des Isolationsteils 8 bzw. 9.

Das Außenkonus-Isolationsteil 9 weist im Bereich seiner Andruckfläche 26 eine harte Schicht 27 auf, deren glatte äußere Oberfläche die Andruckfläche 26 bildet. Ihre Dicke beträgt 1/5 bis 1/50, hier ungefähr 1/20 des größten Radius des Isolationsteils 9. Sie setzt sich an ihrem äußeren Rand in einen Außenflansch 28 fort, der etwas über den äußeren Mantel der Isolationsteile 8, 9 auskragt. Die Schicht 27 und der Außenflansch 28 sind einstückig durch ein Teil aus hartem Material, hier ein Gießharzteil 29 gebildet.

Aufgrund der Paarung hart/anpassungsfähig sind die Andruckflächen 25, 26 mit relativ geringer Reibung ineinanderschiebbar und durch Zusammenpressen in Längsrichtung so aneinanderschmiegbar, daß dazwischen keinerlei Lufteinschlüsse verbleiben.

Drei weitere Maßnahmen tragen dazu bei daß die Steckvorrichtungen 2, 3 mit geringer Reibung zusammengesteckt und auch wieder zerstörungsfrei voneinander getrennt werden können:

Zum einen wird vor dem Zusammenstecken auf die Außenkonus-Andruckfläche 26 ein Trennmittel, hier ein Trennfett, aufgetragen, welches im zusammengesteckten Zustand eine (nicht gezeigte) dünne Trennschicht zwischen den Andruckflächen 25, 26 bildet und dort dauerhaft verbleibt.

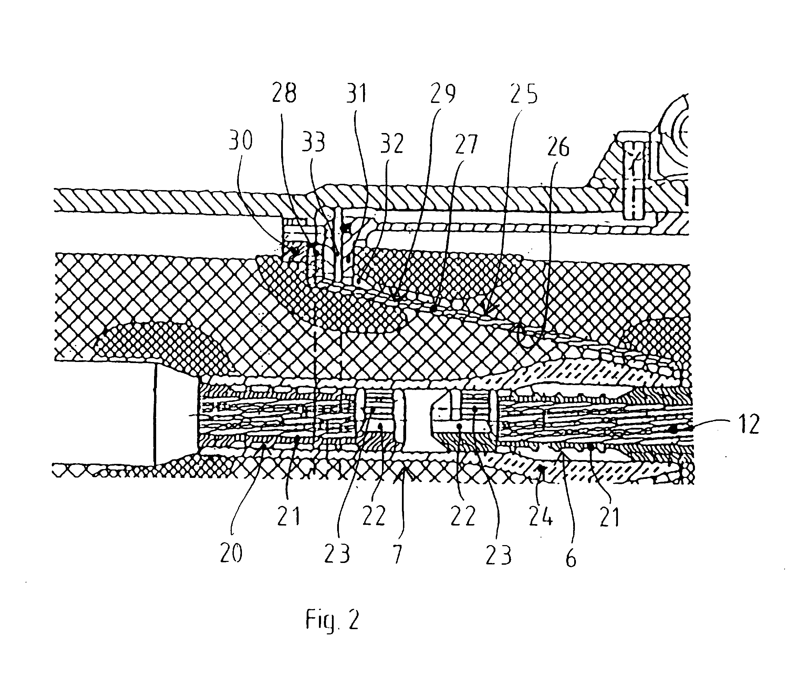

Zum zweiten greifen die Druck- und Zugkräfte beim Zusammenstecken bzw. Trennen so an, daß sie eine Querkompression der Außenkonus-Andruckfläche 26 (beim Zusammenstecken) bzw. eine Querexpansion der Innenkonus-Andruckfläche 25 (beim Trennen) hervorrufen. Die auf das Außenkonus-Isolationsteil 9 wirkende Druckkraft zum Zusammenstecken greift nämlich nur an den Außenflansch 28 an, und zwar über einen am Buchsengehäuseteil 11 befestigten Druckring 30, und die auf das Innenkonus-Isolationsteil 8 wirkende Zugkraft greift nur an dessen äußeren Stirnrand an, und zwar über einen Innenflansch 31 am Steckergehäuseteil 10 (siehe Fig. 2). Die mit diesem jeweils außenliegenden Krafteingriff einhergehenden Momente führen zu den genannten Verformungen der Andruckflächen 25, 26.

Zum dritten weist die Innenkonus-Andruckfläche 25 in ihrem äußeren Endbereich einen Kegelabschnitt auf einem geringfügig größeren Kegelwinkel auf, während die Außenkonus-Andruckfläche 26 nur einen durchgehenden einheitlichen Kegelwinkel hat. Der Winkelunterschied beträgt nur ungefähr 0,2° bis 2°. Er erlaubt noch eine vollständige Anschmiegung der Andruckflächen 25, 26 in zusammengestecktem Zustand und ist daher in der Zeichnung nicht zu erkennen. Der Endbereich mit Winkelunterschied erstreckt sich über 1/10 bis 1/2 der Gesamtlänge der Innenkonus-Andruckfläche 25. Der dort geringere Anpreßdruck erleichtert die Ausbildung einer Trennfuge zwischen den Andruckflächen 25, 26, die sich leicht in den Hauptbereich ohne Winkelunterschied fortpflanzt.

Um das Trennen der Steckvorrichtungen 2, 3 noch weiter zu erleichtern, ist schließlich noch die Möglichkeit einer Drucklufttrennung gegeben, bei der Druckluft zwischen die Andruckflächen 25, 26 eingeführt wird. Hierzu weist die Innenkonus-Andruckfläche 25 an ihrem äußersten Ende einen weiteren Kegelabschnitt mit deutlich größerem Kegelwinkel auf, der zusammen mit der gegenüberliegenden, dem nicht folgenden Außenkonus-Andruckfläche 26 einen im Querschnitt keilförmigen umlaufenden Eintrittsspalt 32 definiert, in dem sich die Andruckflächen 25, 26 nicht berühren (siehe Fig. 2). Die Druckluftzufuhr in den Eintrittsspalt 32 erfolgt von außen durch eine (nicht gezeigte) Gehäusebohrung über einen ringförmigen Zuführspalt 33.

In Längsrichtung erstrecken sich die Isolationsteile 8, 9 jeweils ausgehend vom Endbereich des Steckerkontaktteils 6 bzw. des Buchsenkontaktteilteils 7 über den ersten Kabelabschnitt 17 und den zweiten Kabelabschnitt 18 bis zum Anfangsbereich des dritten Kabelabschnitts 19. Sie schmie gen sich aufgrund ihres anpassungsfähigen, gummielastischen Charakters vollständig an das Steckerkontaktteil 6 (soweit es nicht frei liegt) bzw. das Buchsenkontaktteil 7 und an das Kabeläußere im zweiten und dritten Abschnitt 18, 19 an.

Das Steckvorrichtungs-System 1 weist mehrere Stellen auf, an denen Feldstärkeüberhöhungen auftreten können. Es handelt sich um die Übergangsstellen vom Buchsenkontaktteil 7 zum Steckerkontaktteil 6, jeweils vom Steckerkontaktteil 6 bzw. Buchsenkontaktteil 7 zum zweiten Kabelabschnitt 18, jeweils von dort zum dritten Kabelabschnitt 19, und um die Trennfläche zwischen den Isolationsteilen 8, 9. Zur Kompensation der Feldstärkeüberhöhungen dienen Feldsteuerelektroden 34 im Inneren der Isolationsteile 8, 9, die verrundete Körper aus demselben Material (Silikonkautschuk) wie die die Isolationsteile 8, 9 sind und nur an ihrer Oberfläche eine dünne leitende oder halbleitende Lackschicht aufweisen. Sie sind jeweils im Bereich der Feldstärkeüberhöhungen angeordnet und stehen in elektrischer Verbindung mit dem Leiter 12 bzw. der zweiten halbleitenden Schicht 14 bzw. der außen an den Isolationsteilen 8, 9 befindlichen halbleitenden Schicht.

Als weitere Maßnahme zur Vermeidung von Feldstärkeüberhöhungen (neben der bereits erwähnten bauchigen Formgebung des Buchsenkontaktteils 7) mildern ringförmige Leitschich ten 35, hier aus Graphitlack, jeweils die Stufe am Übergang vom zweiten Kabelabschnitt 18 zum dritten Kabelabschnitt 19.

An ihrem äußeren Mantel werden die Isolationsteile 8, 9 von den Gehäuseteilen 10, 11 umgeben, die im wesentlichen rohrförmig und aus metallischem Material gefertigt sind. Im zusammengesteckten Zustand des Steckvorrichtungs-Systems 1 ist ein Teil das Steckergehäuseteils 10 teleskopisch in das Buchsengehäuseteil 11 eingeschoben, wobei die Einschubtiefe ungefähr der Kegelabschnittshöhe der Andruckflächen 25, 26 entspricht.

An den zum Kabel 4 bzw. 5 gerichteten Stirnseiten weisen die Gehäuseteile 10, 11 jeweils einen Gehäuseabschluß 36 mit einer Kabeldurchführungsmuffe 37 auf. Nur das Kabel 4 bzw. 5 ohne Schutzschicht 15 ist durch sie hindurchgeführt, die Schutzschicht 15 ist hingegen mit ihrem letzten Stück außen über die Kabeldurchführungsmuffe 37 gelegt. Der Gehäuseabschluß 36 des Steckergehäuseteils 10 hat außerdem noch einen Klemmflansch 38 zur Befestigung des Endes des Metallschlauchs 16. Die Kabeldurchführungsmuffe 37 des Steckergehäuseteils 10 setzt sich in einen Druckflansch 39 fort, welcher an der benachbarten Stirnseite des Innenkonus-Isolationsteils 8 anliegt und hierauf die Druckkraft beim Zusammenstecken überträgt. Am Gehäuseabschluß 36 des Buchsengehäuseteil 11 ist hingegen kein derartiger Druckflansch; hier erfolgt die Druckkraftübertragung - wie oben erläutert wurde - auf den Außenflansch 28 des Gießharzteils 29.

An der anderen Stirnseite ist an den Gehäuseteilen 10, 11 jeweils eine Schutzklappe 40 angelenkt, die durch Federbe lastung selbstschließend ist. Da das Steckergehäuseteil 10 in das Buchsengehäuseteil 11 einschiebbar ist, befindet sich hier der Anlenkpunkt nicht direkt am Gehäuse, sondern an einer am Steckergehäuseteil 10 befestigte Konsole 41, welche das Buchsengehäuseteil 11 außen über eine der Einschubtiefe entsprechende Länge übergreift. Beim Trennen des Steckvorrichtungs-System 1 schließen sich die Schutzklappen 40 und legen sich dabei jeweils an die äußere Stirnkante der Gehäuseteile 10 bzw. 11 an, wobei eine darin verlaufende Ringdichtung 42 bzw. 43 für eine hermetische Abdichtung sorgt.

Die zum Buchsengehäuseteil 11 gehörende Ringdichtung 43 hat außerdem noch die Funktion, im zusammengesteckten Zustand durch Anlage an einen Dichtflansch 44 am Steckergehäuseteil 10 für eine Abdichtung der Gehäuseteile 10, 11 gegeneinander zu sorgen. Die zum Steckergehäuseteil 10 gehörende Ringdichtung 42 hat hingegen in diesem Zustand keine Abdichtungsfunktion, sie muß vielmehr den Zuführspalt 33 durchgängig lassen.

Bei der gezeigten Ausführungsform sind die Leiterkontaktteile 6, 7 jeweils gegenüber der (geschlossenen) Schutzklappe 40 zurückgesetzt. Bei anderen (nicht gezeigten) Ausführungsformen liegen sie jedoch jeweils mit ihrem Ende im wesentlichen in der Ebene der Schutzklappe 40 und werden von ihr im geschlossenen Zustand zwecks Erdung kontaktiert.

Jedes der Gehäuseteile 10, 11 weist eine parallel zur Längsachse orientierte Auflagefläche 45 auf, auf der im zusammengesteckten Zustand des Systems 1 die jeweils zum anderen Gehäuseteil 11 bzw. 10 gehörige Schutzklappe 40 mit ihrer Innenfläche aufliegt. Hierdurch wird eine Verschmut zung der Schutzklappen-Innenseiten vermieden.

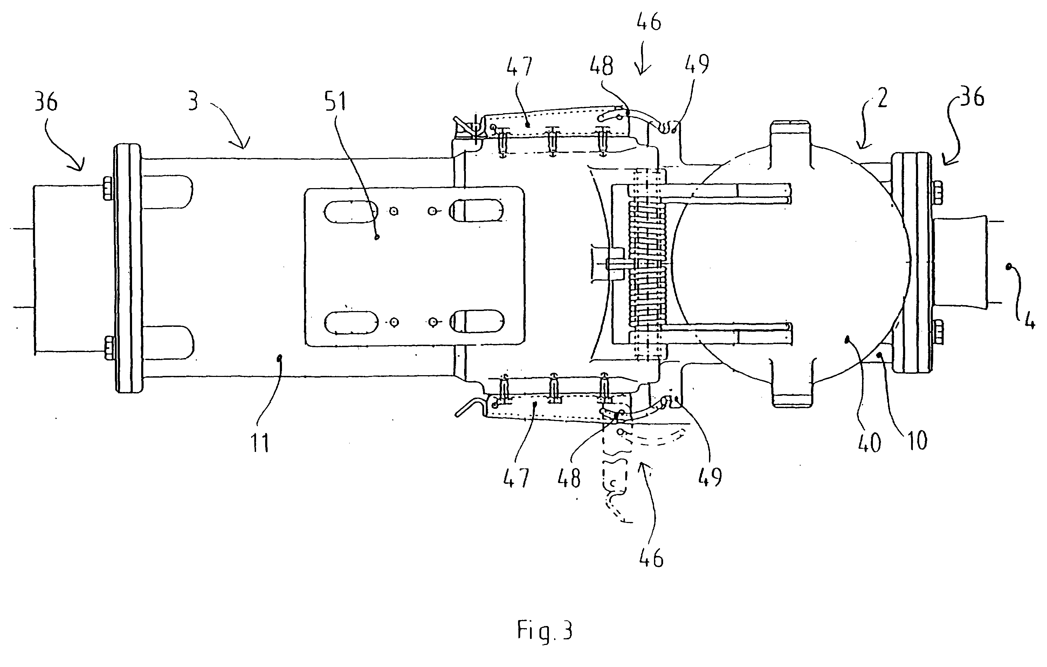

Außen am Steckvorrichtungs-Systems 1 sind gegenüberliegend zwei Spann/Druckhebelverschlüsse 46 angeordnet (siehe Fig. 3). Sie umfassen jeweils einen einarmigen Betätigungshebel 47, der an einem der beiden Gehäuseteile 10, 11, hier dem Buchsengehäuseteil 11, angelenkt ist und in dem nahe dem Anlenkungspunkt ein Ende eines auf Zug und Druck belastbaren Drahtbügels 48 gelagert ist, welcher mit seinem anderen Ende in eine Klaue 49 am anderen Gehäuseteil 11 bzw. 10, hier dem Steckergehäuseteil 10, eingreift. Mit Hilfe der Spann/Druckhebelverschlüsse 46 können der Stecker 2 und die Buchse 3 zusammengezogen und auseinandergedrückt werden.

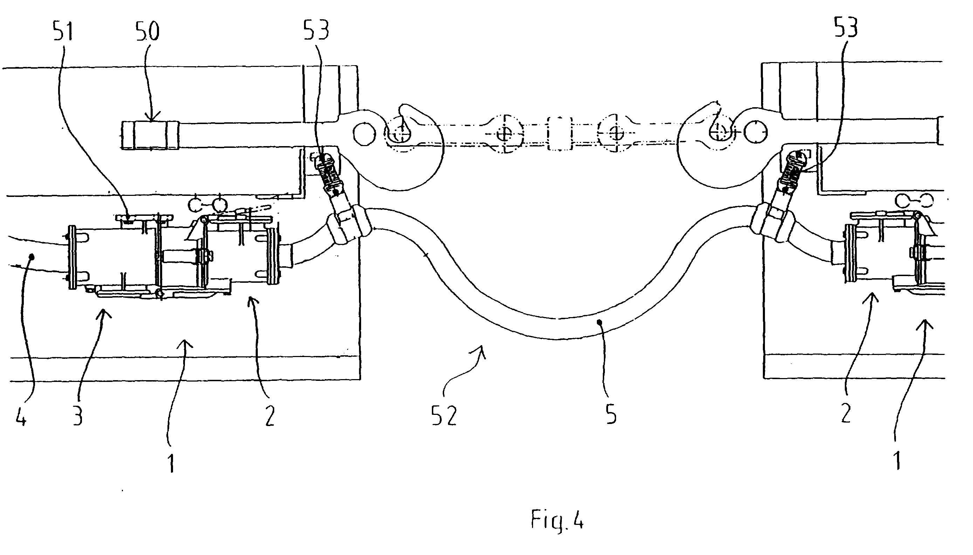

Für eine Verwendung an Eisenbahnfahrzeugen gemäß Fig. 4 ist an den Enden der Fahrzeuge jeweils ungefähr unterhalb von Kupplungshaken-Anlenkpunkten 50 eine Buchse 3 des Steckvorrichtungs-Systems 1 mit Hilfe eines Befestigungsflansches 51 am Buchsengehäuseteil 11 montiert. Ein an der Unterseite des Fahrzeugs verlaufendes stationäres Hochspannungskabel 5 sorgt für die elektrische Verbindung der beiden Buchsen 3 jeweils eines Fahrzeugs. Zur lösbaren elektrischen Verbindung der benachbarten Buchsen 3 zweier gekoppelter Fahrzeuge dient ein sog. Jumper 52, der durch zwei Stecker 2, die mit einem kurzen Hochspannungskabel 4 im Metallschlauch 16 verbunden sind, gebildet wird. Die Länge des Jumpers 52 ist etwas größer als der Sollabstand zwischen den Buchsen 3 zweier gekoppelter Fahrzeuge, um Längungen in Kurven und Gefälleübergängen und auch eine längere Einstellung der Kupplung ausgleichen zu können. Um die Überlänge zwischen zwei Fahrzeugen unterzubringen und dabei aber einen zu großen Durchhang zu vermeiden, ist das Kabel 4 jeweils an den Fahrzeugenden mit Hilfe von Federaufhängungen 53 zunächst nach oben gebogen, von wo aus es dann einen den Fahrzeugabstand überbrückenden durchhängenden Bogen bildet.

Das Steckvorrichtungs-System 1 ist den rauhen Bedingungen des Eisenbahnbetriebs in besonderer Weise gewachsen; es kann jedoch ebenso vorteilhaft der Verbindung stationär verlegter Hochspannungsleitungen dienen.

## Patentansprüche

1. Steckvorrichtungs-System zur Verbindung von Mittelspannungs- oder Hochspannungskabeln (4, 5), gebildet durch zwei komplementäre, jeweils an einem Kabelende anzubringende Steckvorrichtungen (2, 3), die jeweils
- ein inneres Leiterkontaktteil (6, 7) und
- ein äußeres anpassungsfähiges Isolationsteil (8, 9), welches das Kabelende umgibt, aufweisen,
- wobei die Isolationsteile (8, 9) Andruckflächen (25, 26) haben, die im zusammengesteckten Zustand des Steckvorrichtungs-Systems (1) aufeinandergepreßt werden,
dadurch gekennzeichnet, daß im Bereich der Andruckfläche (25, 26) ein Isolationsteil (8) anpassungsfähig und das andere (9) relativ hart ist, was durch eine Schicht (27) harten Materials erzielt wird.

2. Steckvorrichtungs-System nach Anspruch 1, bei welchem die Andruckflächen (25, 26) zur Längsachse des Steck vorrichtungs-Systems (1) geneigt sind.

3. Steckvorrichtungs-System nach Anspruch 2, bei welchem die Andruckflächen (25, 26) im wesentlichen jeweils die Form eines Kegelstumpfmantels oder mehrerer zusammengesetzter Kegelstumpfmäntel haben, und so die Isolationsteile (8, 9) einen Außen- und einen dazu komplementären Innenkonus bilden.

4. Steckvorrichtungs-System nach Anspruch 3, bei welchem das im Bereich der Andruckfläche (26) relativ harte Isolationsteil (9) das den Außenkonus bildende Teil ist.

5. Steckvorrichtungs-System nach einem der Ansprüche 1 bis 4, bei welchem die Schicht (27) harten Materials durch ein Gießharzteil, ein Kunststoff-Drehteil oder einen Lackfilm gebildet ist.

6. Steckvorrichtungs-System nach einem der Ansprüche 1 bis 5, bei welchem das anpassungsfähige Material der Isolationsteile (8, 9) ein im wesentlichen gummielastisches Material ist.

7. Steckvorrichtungs-System nach einem der Ansprüche 1 bis 6, bei welchem in die Isolationsteile (8, 9) eine oder mehrere Feldsteuerelektroden (34) integriert sind.

8. Steckvorrichtungs-System nach Anspruch 7, bei welchem ein Teil der oder alle Feldsteuerelektroden (34) in das anpassungsfähige Material integriert sind und aus einem Material mit im wesentlichen gleichen Elastizi täts- und Wärmeausdehnungseigenschaften wie dieses bestehen.

9. Steckvorrichtungs-System nach Anspruch 8, bei welchem die in das anpassungsfähige Material integrierten Feldsteuerelektroden (34) durch eine dünne leitfähige Oberflächenschicht gebildet sind, in ihrem inneren Volumen jedoch aus einem mit dem umgebenden anpassungsfähigen Material identischen Material bestehen.

10. Steckvorrichtungs-System nach einem der Ansprüche 1 bis 9, bei welchem die Leiterkontaktteile (6, 7) durch ein Steckerkontaktteil (6) und ein Buchsenkontaktteil (7) gebildet sind, wobei zur Kontaktvermittlung zwischen dem Stecker- (6) und dem Buchsenkontaktteil (7) insbesondere federnde Kontaktlamellen (23) dienen, und wobei das Stecker- (6) und das Buchsenkontaktteil (7) mit dem jeweils zugeordneten Ende des Kabelleiters (12) insbesondere durch Aufpressen verbunden sind.

11. Steckvorrichtungs-System nach Anspruch 10, bei welchem das Buchsenkontaktteil (7) durch eine nichtzylindrische, insbesondere bauchige Form an der Feldsteuerung teilnimmt.

12. Steckvorrichtungs-System nach einem der Ansprüche 1 bis 11, bei welchem zur leichteren Trennbarkeit zwischen den Andruckflächen (25, 26) ein Trennmittel, insbesondere ein Fett oder fetthaltiges Mittel, vorhanden ist.

13. Steckvorrichtungs-System nach Anspruch 4 oder einem der auf Anspruch 4 rückbezogenen Ansprüche 5 bis 12, bei welchem die zum Zusammenstecken und Trennen aufgewendeten Druck- bzw. Zugkräfte eine Querkompression der Außenkonus-Andruckfläche (26) bzw. eine Querexpansion der Innenkonus-Andruckfläche (25) hervorrufen.

14. Steckvorrichtungs-System nach Anspruch 3 oder einem der auf Anspruch 3 rückbezogenen Ansprüche 4 bis 13, bei welchem der Innenkonus in seinem äußeren Endbereich einen geringfügig größeren Konuswinkel als der Außenkonus aufweist.

15. Steckvorrichtungs-System nach einem der Ansprüche 1 bis 14, welches so ausgebildet ist, daß zum Trennen ein Druckfluid, insbesondere Druckluft, zwischen die Andruckflächen (25, 26) eingeleitet werden kann.

16. Steckvorrichtungs-System nach einem der Ansprüche 1 bis 15, bei welchem die Steckvorrichtungen (2, 3) außerdem jeweils ein Gehäuseteil (10, 11) aufweisen, wobei im zusammengesteckten Zustand des Steckvorrich tungs-Systems (1) ein Gehäuseteil (11) das andere (10) wenigstens teilweise übergreift, insbesondere indem es teleskopisch über das andere schiebbar ist.

17. Steckvorrichtungs-System nach Anspruch 16, bei welchem die Gehäuseteile (10, 11) jeweils eine Schutzklappe (40) aufweisen, welche im nicht zusammengesteckten Zustand des Steckvorrichtungs-Systems (1) schließbar ist, und zwar insbesondere durch Federbelastung selbstschließend ist, so daß das jeweils zugeordnete Leiterkontaktteil (6, 7) und Isolationsteil (8, 9) vor Verschmutzung und Berührung geschützt werden.

18. Steckvorrichtungs-System nach Anspruch 17, bei welchem die Schutzklappen (40) in geschlossener Stellung zwecks Erdung des Kabelleiters (12) das jeweilige Leiterkontaktteil (6, 7) kontaktieren.

19. Steckvorrichtungs-System nach Anspruch 17 oder 18, bei welchem auf jedem Gehäuseteil (10, 11) eine Auflagefläche (44) ausgebildet ist, auf der die Schutzklappe (40) des jeweils anderen Gehäuseteils (11, 10) im zusammengesteckten Zustand des Steckvorrichtungs-Systems (1) aufliegt, so daß die Schutzklappen-Innenseiten vor Verschmutzung geschützt werden.

20. Steckvorrichtungs-System nach einem der Ansprüche 16 bis 19, bei welchem an den Gehäuseteilen (10, 11) wenigstens ein Spann/Druckhebelverschluß (45) angeordnet ist, mit dem die Steckvorrichtungen (2, 3) zu sammengezogen und auseinandergedrückt werden können.

## Claims

1. A plug connector system for connecting medium- or high-voltage cables (4, 5),
formed by two complementary plug connectors (2, 3) each to be mounted on one cable end, which each comprises
- an internal wire contact part (6, 7) and
- an external, adaptable insulating part (8, 9), which surrounds the cable end,
- wherein the insulating parts (8, 9) have pressure faces (25, 26), which in the assembled state of the plug connector system (1) are pressed onto one another,
**characterised in that** in the region of the pressure faces (25, 26) one insulating part is adaptable and the other (9) is relatively hard, which is achieved by a layer (27) of hard material.

2. A plug connector system according to Claim 1, in which the pressure faces (25, 26) are inclined with respect to the longitudinal axis of the plug connector system (1).

3. A plug connector system according to Claim 2, in which the pressure faces (25, 26) have substantially the shape of a truncated cone shell or several assembled truncated cone shells, and thus the insulating parts (8, 9) form an external cone and an internal cone complementary thereto.

4. A plug connector system according to Claim 3, in which the relatively hard insulating part (9) in the region of the pressure face (26) is the part forming the external cone.

5. A plug connector system according to one of Claims 1 to 4, in which the layer (27) of hard material is formed by a cast moulding, a plastics turned part or a film of lacquer.

6. A plug connector system according to one of Claims 1 to 5, in which the adaptable material of the insulating parts (8, 9) is a substantially rubber-elastic material.

7. A plug connector system according to one of Claims 1 to 6, in which one or more field-effect electrodes (34) are integrated into the insulating parts (8, 9).

8. A plug connector system according to Claim 7, in which a part of the or all field-effect electrodes (34) are integrated into the adaptable material and are made from a material having substantially identical elasticity and thermal expansion properties as said material.

9. A plug connector system according to Claim 8, in which the field-effect electrodes (34) integrated in the adaptable material are formed by a thin conductive surface layer, however in their internal volume are made from a material which is identical to the surrounding adaptable material.

10. A plug connector system according to one of Claims 1 to 9, in which the wire contact parts (6, 7) are formed by a plug contact part (6) and a socket contact part (7), wherein resilient contact blades (23) in particular serve for establishing contact between the plug (6) and the socket contact parts (7), and wherein the plug contact part (6) and the socket contact part (7) are connected to the respective associated end of the cable conductor (12), in particular by pressing on.

11. A plug connector system according to Claim 10, in which the socket contact part (7) participates in the field effect by a non-cylindrical, especially bulging shape.

12. A plug connector system according to one of Claims 1 to 11, in which for easier separability between the pressure faces (25, 26) a separating agent, in particular a fat or fatty medium, is provided.

13. A plug connector system according to Claim 4 or one of Claims 5 to 12 referring back to Claim 4, in which the pressure and tensile forces applied for connecting and separating cause a transverse compression of the external cone pressure face (26) or a transverse expansion of the internal cone pressure face (25).

14. A plug connector system according to Claim 3 or one of the Claims 4 to 13 referring back to Claim 3, in which in its external end region the internal cone has a slightly larger cone angle than the external cone.

15. A plug connector system according to one of Claims 1 to 14, which is constructed so that for separation a hydraulic fluid, in particular compressed air, can be introduced between the pressure faces (25, 26).

16. A plug connector system according to one of Claims 1 to 15, in which the plug connectors (2, 3) also each have a housing part (10, 11), wherein in the assembled state of the plug connector system (1) one housing part (11) at least partly engages over the other one (10), in particularly by it being pushed telescopically over the other one.

17. A plug connector system according to Claim 16, in which the housing parts (10, 11) each have a protective swing valve (40), which in the non-assembled state of the plug connector system (1) can be closed, and namely automatically closes in particular by spring loading so that the respectively associated wire contact part (6, 7) and the insulating part (8, 9) are protected from contamination and contact.

18. A plug connector system according to Claim 17, in which the protective swing valves (40) in the closed position contact the respective wire contact parts (6, 7) for the purpose of earthing the cable conductor (12).

19. A plug connector system according to Claim 17 or 18, in which constructed on each housing part (10, 11) is a bearing surface (44), on which the protective swing valve (40) of the respective other housing part (11, 10) lies in the assembled state of the plug connector system (1), so that the inner sides of the protective swing valve are protected against contamination.

20. A plug connector system according to one of Claims 16 to 19, in which disposed at the housing parts (10, 11) is at least one tension arm/pressure lever closure (45), with which the plug connectors (2, 3) can be pulled together and forced apart.

## Revendications

1. Système de dispositif de branchement pour la connection de câbles à moyenne ou haute tension (4, 5), composé de deux dispositifs de branchement (2, 3) complémentaires, à fixer chacun à une extrémité de câble, ayant chacun
- une partie conductrice intérieure (6, 7) et
- une partie d'isolation cédante extérieure (8, 9), entourant l'extrémité de câble,
- les parties d'isolation (8, 9) ayant des plans de pression (25, 26), étant pressés l'un sur l'autre dans un état de jonction du système de dispositif de branchement (1),
**caractérisé en ce que** dans la région des plans de pression (25, 26) une partie d'isolation (8) est cédant et l'autre (9) est relativement dure, ce qui est atteint par une couche (27) de matière dure.

2. Système de dispositif de branchement selon la revendication 1, dans lequel les plans de pression (25,26) sont inclinés vers l'axe longitudinal du système de dispositif de branchement (1).

3. Système de dispositif de branchement selon la revendication 2, dont chacun des plans de pression (25, 26) est essentiellement formé d'une surface d'un bout de cône ou de plusieurs surfaces de bouts de cône assemblées, de telle sorte que les parties d'isolation (8, 9) forment un cône extérieur et un cône intérieur complémentaire.

4. Système de dispositif de branchement selon la revendication 3, dans lequel la partie d'isolation (9) relativement dure dans la région des plans de pression est la partie constituant le cône extérieur.

5. Système de dispositif de branchement selon une des revendications 1 à 4, dans lequel la couche (27) de matière dure est constituée par une partie de résine moulée, une partie fabriquée par rotation en matière plastique ou une pellicule de laque.

6. Système de dispositif de branchement selon une des revendications 1 à 5, dans lequel la matière cédante des parties d'isolation (8, 9) est essentiellement une matière de caoutchouc élastique.

7. Système de dispositif de branchement selon une des revendications 1 à 6, dans lequel une électrode ou plusieurs électrodes de régulation de champ est/sont intégrée(s) dans les parties d'isolation (8, 9).

8. Système de dispositif de branchement selon la revendication 7, dans lequel une partie des électrodes de régulation de champ ou toutes les électrodes de régulation de champ (34) sont intégrées dans le matériel cédant et sont composées d'une matière ayant essentiellement les mêmes caractéristiques d'élasticité et d'expansion thermique.

9. Système de dispositif de branchement selon la revendication 8, dans lequel les électrodes de régulation de champ (34) intégrées dans le matériel cédant sont constituées par une mince couche de surface conductrice, mais consistent dans leur volume intérieur cependant d'un matériel qui est identique au matériel cédant entourant.

10. Système de dispositif de branchement selon une des revendications 1 à 9, dans lequel les parties conductrices (6, 7) sont constituées d'une partie de branchement (6) et d'une partie de prise (7), particulièrement des lamelles de contact (23) faisant ressort servant d'intervention de contact entre la partie de branchement (6) et la partie de prise (7), et la partie de branchement (6) et la partie de prise (7) étant connectées, essentiellement par pression, à l'extrémité respective du conducteur de câble (12).

11. Système de dispositif de branchement selon la revendication 10, dans lequel la partie de prise (7) participe à la régulation de champ par une forme non-cylindrique et essentiellement bombée.

12. Système de dispositif de branchement selon une des revendications 1 à 11, dans lequel un moyen de séparation, essentiellement une graisse ou un moyen gras, est prévu pour faciliter la séparation des plans de pression (25, 26).

13. Système de dispositif de branchement selon la revendication 14 ou selon une des revendications 5 à 12 faisant référence à la revendication 4, dans lequel les forces de pression respectivement les forces de traction utilisées pour la connection et la séparation suscitent une compression transversale des plans de pression du cône extérieur (26) respectivement une expansion transversale des plans de pression du cône intérieur (25).

14. Système de dispositif de branchement selon la revendication 3 ou selon une des revendications 4 à 13 faisant référence à la revendication 3, dans lequel le cône intérieur dans sa position finale extérieure possède un angle de cône légèrement plus grand que le cône extérieur.

15. Système de dispositif de branchement selon une des revendications 1 à 14, constitué de telle sorte que pour la séparation un fluid de pression, particulièrement un air de pression, peut être introduit entre les plans de pression (25, 26).

16. Système de dispositif de branchement selon une des revendications 1 à 15, dans lequel les dispositifs de branchement (2, 3) comprennent en outre chacun une partie de logement (10, 11), une partie de logement (11) enveloppant au moins partiellement l'autre (12) dans l'état connecté du système de dispositif de branchement (1), l'une étant essentiellement déplaceable au-dessus de l'autre de façon téléscopique.

17. Système de dispositif de branchement selon la revendication 16, dans lequel les parties de logement (10, 11) comprennent chacune un couvercle de protection (40), étant refermable dans la position non-connectée du système de dispositif de branchement (1), et même étant refermable de façon automatique par une charge de ressort, de telle sorte que la partie conductrice (6, 7) et la partie d'isolation (8, 9) soient protégées contre la pollution et le contact.

18. Système de dispositif de branchement selon la revendication 17, dans lequel pour la prise de masse des conducteurs de câble (12) les couvercles de protection (40) dans leur position fermée contactent la partie conductrice (6, 7).

19. Système de dispositif de branchement selon la revendication 17 ou 18, dans lequel sur chaque partie de logement (10, 11) une surface portante (44) est formée, sur laquelle repose le couvercle de protection (40) de l'autre partie de logement (11, 10) dans l'état connecté du système de dispositif de branchement (1), de telle sorte que les côtés intérieurs des couvercles de protection se trouvent protégés contre la pollution.

20. Système de dispositif de branchement selon une des revendications 16 à 19, dans lequel au moins une fermeture de levier de tension/de pression (45) est agencée aux parties de logement (10, 11), avec laquelle les dispositifs de branchement (2, 3) puissent être contractés et séparés.
